Europäisches Patentamt

(19) European Patent Office

Office européen des brevets

(11) Publication number: **0 187 407**
**B1**

(12) **EUROPEAN PATENT SPECIFICATION**

(45) Date of publication of patent specification: **30.11.88**

(21) Application number: **85201969.4**

(22) Date of filing: **09.12.82**

(60) Publication number of the earlier application in accordance with Art. 76 EPC: **0 084 233**

(51) Int. Cl.⁴: **G 01 F 1/32, G 01 P 5/01**

(54) **Processing vortex shedding frequency signals.**

(30) Priority: **10.12.81 US 329500**

(43) Date of publication of application:
**16.07.86 Bulletin 86/29**

(45) Publication of the grant of the patent:
**30.11.88 Bulletin 88/48**

(84) Designated Contracting States:
**DE FR GB IT**

(56) References cited:
**DE-B-2 446 147**
**US-A-3 854 334**
**US-A-4 019 384**

(73) Proprietor: **THE BABCOCK & WILCOX COMPANY**
**1010 Common Street P.O. Box 60035**
**New Orleans Louisiana 70160 (US)**

(72) Inventor: **Thompson, William L.**
**15364 Gar Highway**
**Chardon Ohio (US)**

(74) Representative: **Cotter, Ivan John et al**
**D. YOUNG & CO. 10 Staple Inn**
**London WC1V 7RD (GB)**

Courier Press, Leamington Spa, England.

## Description

This invention relates to vortex shedding flowmeter systems including a vortex shedding flowmeter and a circuit for processing a vortex shedding frequency signal of the flowmeter.

It is known that, when a non-streamlined obstacle is presented in a fluid flow path, vortices are shed from alternate sides of the obstacle. The obstacle is termed a bluff body and utilised as a vortex shedding flowmeter with sensing means for sensing the passage of the vortices. The frequency of passage of the vortices is directly proportional to the volumetric flow in the flow path.

It is known to amplify the signal from the vortex sensor and to use various structures for the sensor itself.

It is further known that the signal from the vortex sensor has fluctuating amplitudes due to non-uniformities in the flow being measured. This gives noisy or fluctuating signals at the output of a flow transmitter using a vortex shedding sensor in many applications. This is observed as an intermittent loss of signal.

Examples of vortex shedding flowmeters and connecting circuitry therefor can be found in U.S. Patents Nos. US—A—4 134 297 (Herzl), US—A—4 123 940 (Herzl) and US—A—4 033 188 (Herzl).

US Patent No. US—A—3 854 334 discloses a vortex shedding flowmeter system including a vortex shedding flowmeter and a circuit for processing a vortex shedding frequency signal of the flowmeter, the circuit comprising a phase detector for receiving the vortex shedding frequency signal and comparing it with a locally generated tracking frequency signal, a low pass filter for receiving an output signal from the phase detector and producing an analog signal corresponding thereto, a voltage controlled oscillator connected to an output of the low pass filter for generating the tracking frequency signal corresponding to the vortex shedding frequency signal, and accumulator means (a counter) connected to the VCO for receiving the tracking frequency signal.

US Patent No. US—A—4 019 384 discloses timing means connected to an accumulator means used in a circuit for processing a vortex shedding frequency signal. This timing means activates the accumulator means to measure the frequency of the vortex shedding frequency signal during a selected time period, and to generate at a digital output line thereof a digital signal corresponding to the measured frequency. The timing period of the said timing means is determined by the time constant of a RC-network formed by a capacitor and a resistive element.

US Patent No. US—A—4 123 940 (cited above) discloses a vortex shedding flowmeter system which includes means for affording protection against signal fading. A phase detector compares the frequency of pulses representing a flow rate with an output of a counter to produce an output voltage which is fed through a filter to a VCO coupled to an input of the counter. In this way, an output of the phase detector adjusts the frequency of the VCO to cause the output of the counter to become equal to the pulse frequency.

According to the present invention there is provided a vortex shedding flowmeter system including a vortex shedding flowmeter and a circuit for processing a vortex shedding frequency signal of the flowmeter, the circuit comprising a phase detector for receiving the vortex shedding frequency signal and comparing it with a locally generated tracking frequency signal, a low pass filter for receiving an output signal from the phase detector and producing an analog signal corresponding thereto, a voltage controlled oscillator connected to an output of the low pass filter for generating the tracking frequency signal corresponding to the vortex shedding frequency signal, and accumulator means connected to the voltage controlled oscillator for receiving the tracking frequency signal, characterised in that timing means is connected to the accumulator means for activating the accumulator means to measure the frequency of the tracking frequency signal during a selected time period, the accumulator means having digital output lines for generating a digital signal corresponding to the measured frequency, and in that the timing means comprises a plurality of series-connected resistors each having a respective electronic switch connected in parallel with it, means for selectively opening the switches for establishing a selected resistance across the plurality of series-connected resistors, a resistor connected at one end to one end of the series-connected resistors, and at the other end to current producing means, said current producing means also being connected to the other end of the series-connected resistors for producing a current which is proportional to an equivalent resistance formed by the series connected resistors, a capacitor connected to the current producing means so as to be charged to a selected voltage at a time which depends on the current supplied by the current producing means, and comparator means connected between the capacitor and the accumulator means for activating the accumulator means during the time that the capacitor is being charged to the selected voltage.

Such an arrangement enables the vortex shedding frequency signal to be interfaced with circuitry (for example transmission circuitry) that requires a digital code. Also, it enables the gain or span of the circuit to be changed, for example from a remote location.

A preferred embodiment of the present invention described hereinbelow comprises a circuit or transmitter for processing a signal coming from a vortex sensor of a vortex shedding flowmeter. Digital electronics are utilised to process the signal and produce a typical output of 4 to 20 mA. A serial digital code is also provided as an output using two wires which are also utilised to transmit power to the circuit. Range change can be provided over the same two wires when indicated by a remote receiver. The preferred circuit utilises a phase lock loop arrangement which allows extraction of information from a noisy and partially intermittent vortex flowmeter signal. As mentioned above, the preferred circuit includes a phase detector to receive the vortex shedding frequency signal and compare it with a locally generated tracking frequency signal, a low pass filter for receiving an output signal from the phase detector and producing an analog signal corresponding thereto, and a voltage controlled oscillator connected to the low pass filter for generating the tracking frequency signal corresponding to the vortex shedding frequency signal. The phase detector is connected between the voltage controlled oscillator and an input to the low pass filter, and a holding action is performed in the low pass filter for maintaining the last generated tracking frequency signal when the vortex shedding frequency signal has been sensed to have disappeared.

Our copending European Patent Application No. 82306581.8 (EP—A—0 084 233), from which the present application was divided out, includes claims directed to a preferred circuit including a signal dropout detector connected between an input of the phase detector and a normally closed electronic switch connected between the phase detector and the low pass filter for disconnecting the phase detector from the input of the low pass filter when the vortex shedding frequency signal disappears. The phase detector of this circuit receives the tracking frequency signal fed back from the voltage controlled oscillator when the vortex shedding frequency signal is above a predetermined amplitude.

The present invention will now be further described, by way of illustrative and non-limiting example, with reference to the accompanying drawing, in which:

Figure 1 is a block diagram of a portion of a processing circuit for a flowmeter system embodying the invention; and

Figure 2 is a block schematic representation of another portion of the circuit.

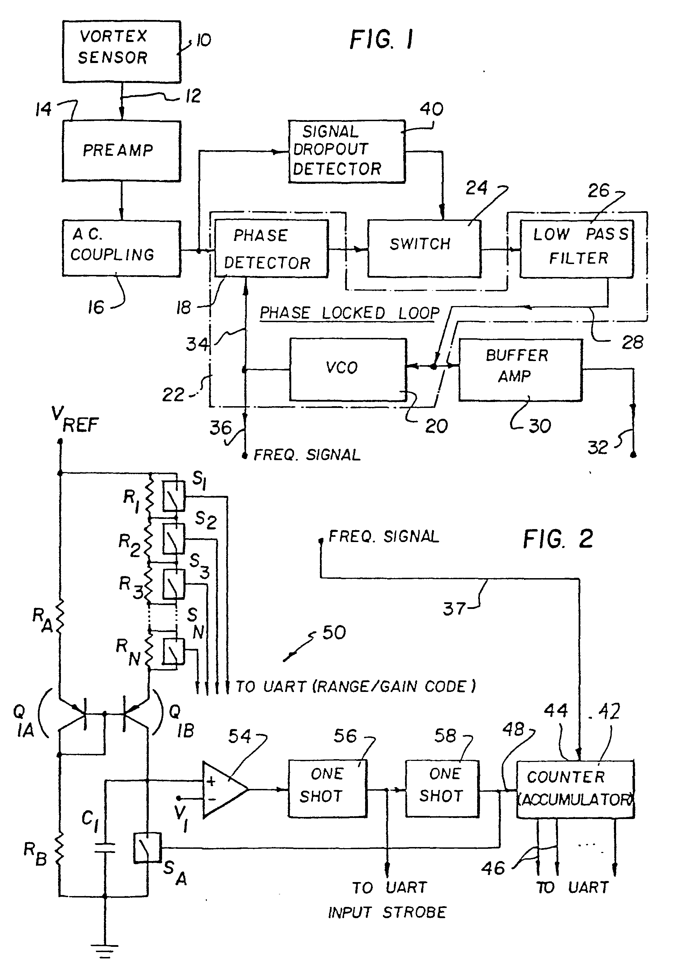

Figure 1 of the drawings shows a circuit or transmitter using digital techniques for processing a vortex shedding frequency signal from a vortex sensor 10 of known design of a vortex shedding flowmeter.

As is known, a vortex shedding flowmeter can be prepared by placing a non-streamlined obstruction, called a bluff body, in a fluid flow path. Alternating vortices are shed from the obstruction. The rate of creation of the vortices is proportional to the fluid flow rate.

The vortex sensor 10 thus produces a signal over a line 12 which varies with the vortex shedding frequency. The signal is amplified in a preamplifier 14 and then connected via an AC coupling 16 to an input of a phase detector 18. The phase detector 18 can be of the "phase discriminator II" variety as available under the type designation CD4046B. The phase detector 18 is edge triggered and cooperates with a voltage controlled oscillator (VCO) 20 that locally generates a frequency signal. An output of the phase detector 18 is connected over an electronic switch 24—for example a CD4066B—to a low pass filter 26 that produces an analog signal corresponding to the frequency of the vortex shedding frequency signal.

The combination of the VCO 20, low pass filter 26 and phase detector 18 forms a phase locked loop 22. The phase locked loop 22 is for example an RCA-CD4046B, COS-MOS phase locked loop and includes the VCO 20 which tracks the input frequency and, if the input frequency disappears, maintains the last frequency value. Such a phase locked loop 22 uses low power and incorporates the low pass filter 26, which produces an analog voltage signal which corresponds to the frequency of the frequency signal being tracked.

The low pass filter 26 has an output which is applied over a line 28 to a junction or connection between the VCO 20 and a buffer amplifier 30. An output of the buffer amplifier 30 is supplied over a line 32 as an analog signal. More specifically, the output of the low pass filter 26, as amplified by the buffer amplifier 30, is an analog voltage signal which is proportional to the signal frequency. The buffer amplifier 30 is a high input impedance operational amplifier and is used to drive a linear output stage.

The output of the VCO 20, which is a tracking frequency signal corresponding to the vortex shedding frequency signal, is fed back to the phase detector 18 over a line 34 and also tapped via a line 36 to form a frequency signal output terminal.

A phase dropout or dropoff detector 40, the function of which is explained in our above-cited copending European Patent Application 82306581.8 (EP—A—0 084 233), is connected between the input of the phase detector 18 and the electronic switch 24.

Figure 2 illustrates an arrangement to interface the vortex shedding frequency with transmission circuitry that requires a digital code. This circuit also permits the transmission circuitry to receive another code to be used to change the range of the circuit or transmitter of Figure 1. This permits the conversion of the vortex shedding frequency into a convenient and adjustable frequency range and then the digital transmittal of the signal to a remote receiver. Such an arrangement is very advantageous for computer based acquisition applications.

The frequency signal on the line 36 of Figure 1 is connected over a line 37 to a counter 42. The counter 42 can be in the form of an accumulator for accumulating the frequency signal presented to a clock input 44 thereof. A digital output is produced and provided over output lines 46 to a UART unit. The UART (Universal Asynchronous Receiver Transmitter) unit may be a CMOS-LSI-UART unit such as an IM-6402 or an IM-6403. A receiver section of such units converts serial data into parallel data and a transmitter section converts parallel data into serial data. The UART unit can thus be utilised to interface with a computer or microprocessor.

The counter or accumulator 42 is activated, to initiate its function of accumulating the frequency signal from the line 37, over a reset input 48. The accumulator reset input 48 is connected to a timing circuit 50 which functions to time accurately the active period of the accumulator 42 and thus provides the information necessary to determine accurately the frequency from the circuit of Figure 1.

The timing circuit 50 comprises a plurality of series-connected switches $S_1$ to $S_N$, each of which is connected in parallel with a respective one of a plurality of series-connected resistors $R_1$ to $R_N$. The switches $S_1$ to $S_N$ are individually activatable by the UART unit for selecting a range or gain code. The series-connected resistors $R_1$ to $R_N$ are connected to a resistor $R_A$. The above-mentioned resistors are connected as shown to inputs (emitters) of a double transistor $Q_{1A}$, $Q_{1B}$. The bases of the double transistor are connected together, one collector is connected to ground via a switch $S_A$, and the other collector is connected to ground via a resistor $R_B$. A reference voltage $V_{REF}$ is applied where shown. The switch $S_A$ is closed to apply a zero voltage to (i.e. short circuit or discharge) a capacitor $C_1$, which is connected in parallel with the switch. Upon resetting the capacitor $C_1$ to zero, it begins to charge. During its charging time, the counter 42 counts the vortex shedding frequency presented by the output of the circuit of Figure 1. This continues until the voltage on the capacitor $C_1$ reaches a value $V_1$. This voltage is applied to a positive terminal of a comparator amplifier 54. A negative terminal of the comparator amplifier 54 is connected to a source of the voltage $V_1$. When the voltages on the terminals of the comparator amplifier 54 are equal, a one-shot 56 is fired and applies a signal to the UART unit which is strobed to read the value on the output lines 46. Also, a second one-shot 58 is fired to reset the counter 42.

The range of the circuit or transmitter, or equivalently its gain or span, can be modified by a code received over a transmission link and applied to input lines of the switches $S_1$ to $S_N$. The current applied to the capacitor $C_1$ is determined by the voltage across the string of resistors $R_1$ to $R_N$ and by the selected total resistance they present (that is, the resistance not bypassed by the switches $S_1$ to $S_N$). The voltage $V_{RA}$ across the resistor $R_A$ is a fraction of the reference voltage $V_{REF}$. Specifically:

$$V_{RA} = \frac{R_A}{R_A + R_B} \cdot V_{REF} \qquad (1)$$

Since the base-emitter voltage of $Q_{1A}$ (one half of the dual transistor) also affects this voltage, a value which is more accurate over a temperature range can be obtained by replacing $R_B$ with a temperature compensating circuit source such as may be provided by an LM134/334 integrated circuit.

The current into the capacitor $C_1$ becomes

$$I = \frac{V_{RA}}{R_{eq}}$$

where $R_{eq}$ is the total resistance switched in from the resistors $R_1$ to $R_N$.

The voltage across the capacitor $C_1$ is calculated from:

$$\frac{dv}{dt} = \frac{I}{C_1} \qquad (2)$$

where dv is the voltage change and dt is the time period. The period dt is the period during which the counter 42 operates and is given by:

$$dt = \frac{C_1 \, dv}{I} \qquad (3)$$

Substituting $V_1$ for dv and combining with equation (1) gives:

$$dt = \frac{C_1 V_1 R_{eq}}{V_{RA}} \qquad (4)$$

$R_{eq}$ is then a multiple (M, the received code) of a base resistor R and given by:

$$R_{eq} = MR \qquad (5)$$

Substituting equation (5) in equation (4) gives:

$$dt = \frac{C_1 V_1 MR}{V_{RA}} \qquad (6)$$

Thus, the period dt is a constant $(C_1 V_1 R/V_{RA})$ times the received code M. This permits the gain of the circuit of transmitter to be changed from a remote location (the UART for example).

The foregoing description sets forth details of a digital implementation of a vortex shedding flow meter processing circuit or transmitter having:

1. A reduction in noise.
2. Extended operation into two-phase flow.
3. Conversion of vortex shedding frequency into digital code for transmission.
4. Adjustable gain (or span) controlled from a remote location.

**Claims**

1. A vortex shedding flowmeter system including a vortex shedding flowmeter and a circuit for processing a vortex shedding frequency signal of the flowmeter, the circuit comprising:

a phase detector (18) for receiving the vortex shedding frequency signal and comparing it with a locally generated tracking frequency signal;

a low pass filter (26) for receiving an output signal from the phase detector (18) and producing an analog signal corresponding thereto:

a voltage controlled oscillator (20) connected to an output of the low pass filter (26) for generating the tracking frequency signal corresponding to the vortex shedding frequency signal; and

accumulator means (42) connected to the voltage controlled oscillator (20) for receiving the tracking frequency signal;

characterised in that timing means (50) is connected to the accumulator means (42) for activating the accumulator means to measure the frequency of the tracking frequency signal during a selected time period, the accumulator means (42) having digital output lines (46) for generating a digital signal corresponding to the measured frequency, and in that the timing means (50) comprises a plurality of series-connected resistors ($R_1$ to $R_N$) each having a respective electronic switch ($S_1$ to $S_N$) connected in parallel with it, means (UART) for selectively opening the switches ($S_1$ to $S_N$) for establishing a selected resistance across the plurality of series-connected resistors ($R_1$ to $R_N$), a resistor ($R_A$) connected at one end to one end of the series-connected resistors ($R_1$ to $R_N$), and at the other end to current producing means ($Q_{1A}$, $Q_{1B}$), said current producing means also being connected to the other end of the series-connected resistors for producing a current which is proportional to an equivalent resistance formed by the series connected resistors, a capacitor ($C_1$) connected to the current producing means ($Q_{1A}$, $Q_{1B}$) so as to be charged to a selected voltage ($V_1$) at a time which depends on the current supplied by the current producing means, and comparator means connected between the capacitor ($C_1$) and the accumulator means (42) for activating the accumulator means during the time that the capacitor ($C_1$) is being charged to the selected voltage ($V_1$).

2. A system according to claim 1, wherein the comparator means comprises a comparator amplifier (54) having one input connected to the capacitor ($C_1$), another input connected to a source of the selected voltage ($V_1$), and an output connected to the accumulator means (42) for activating the accumulator means.

3. A system according to claim 2, wherein the current producing means comprises a double transistor ($Q_{1A}$, $Q_{1B}$) having emitters connected to the resistors ($R_A$, $R_1$ to $R_N$), one collector connected to the capacitor ($C_1$) and the other collector connected to a further resistor ($R_B$).

4. A system according to claim 3, including a switch ($S_A$) connected in parallel with the capacitor ($C_1$) and having a control terminal connected to an output of the comparator amplifier (54) for closing the switch ($S_A$) when the voltage across the capacitor reaches the selected voltage ($V_1$) to discharge the capacitor.

## Patentansprüche

1. Flußmessersystem für die Wirbelablösung mit einem Wirbelablöseflußmesser und einer Schaltung zur Verarbeitung eines Wirbelablösefrequenzsignals des Flußmessers, wobei die Schaltung aufweist:

einen Phasendetektor (18) zur Aufnahme des Wirbelablösefrequenzsignals und zum Vergleichen desselben mit einem örtlich erzeugten Nachführfrequenzsignal;

einen Niederpaßfilter (26) zur Aufnahme eines Ausgangssignals von dem Phasendetektor (18) und zur Erzeugung eines diesem entsprechenden analogen Signals;

einen spannungsgesteuerten Oszillator (20), der mit einem Ausgang des Niederpaßfilters (26) verbunden ist zur Erzeugung des Nachführfrequenzsignals entsprechend dem Wirbelablösefrequenzsignal; und

Akkumulatormittel (42), die mit dem spannungsgesteuerten Oszillator (20) verbunden sind zur Aufnahme des Nachführfrequenzsignals;

dadurch gekennzeichnet, daß ein Zeitgebermittel (50) mit dem Akkumulatormittel (42) verbunden ist zur Aktivierung des Akkumulatormittels zum Messen der Frequenz des Nachführfrequenzsignals während einer ausgewählten Zeitperiode; wobei das Akkumulatormittel (42) digitale Ausgangsleitungen (46) hat zur Erzeugung eines digitalen Signales, welches der gemessenen Frequenz entspricht, und daß das Zeitgebermittel (50) eine Mehrzahl von in Reihe verbundenen Widerständen ($R_1$—$R_n$) aufweist, deren jeder einen entsprechenden elektronischen Schalter ($S_1$—$S_n$) hat, die parallel mit ihm verbunden sind, Mittel (UART) hat zum wahlweisen Öffnen der Schalter ($S_1$—$S_n$) zur Bildung eines ausgewählten Widerstandes über die Mehrzahl von in Reihe verbundenen Widerständen ($R_1$—$R_n$), einen Widerstand ($R_a$), der an einem Ende mit einem Ende der in Reihe verbundenen Widerstände ($R_1$—$R_n$) verbunden ist und am anderen Ende mit Stromerzeugungsmitteln ($Q_{1A}$, $Q_{1B}$), wobei das Stromerzeugungsmittel auch mit dem anderen Ende der in Reihe verbundenen Widerstände verbunden ist für die Erzeugung eines Stromes, der proportional ist zu einem äquivalenten Widerstand, welcher durch die in Reihe verbundenen Widerstände gebildet ist, einen Kondensator ($C_1$), der mit dem Stromerzeugungsmittel ($Q_{1A}$, $Q_{1B}$) verbunden ist, um auf eine ausgewählte Spannung ($V_1$) in einer Zeit aufgeladen zu werden, die von dem Strom abhängt, der von dem Stromerzeugungsmittel zugeführt wird, und Vergleichsmittel aufweist, die zwischen dem Kondensator ($C_1$) und dem Akkumulatormittel (42) verbunden sind zur Aktivierung des Akkumulatormittels während derjenigen Zeit, während welcher der Kondensator ($C_1$) auf die ausgewählte Spannung ($V_1$) aufgeladen wird.

2. System nach Anspruch 1, wobei das Vergleichsmittel einen Vergleichsverstärker (54) aufweist, dessen einer Eingang mit dem Kondensator ($C_1$) verbunden ist, dessen anderer Eingang mit einer Quelle der ausgewählten Spannung (V$_1$) verbunden ist und deren Ausgang mit dem Akkumulatormittel (42) für das Aktivieren des Akkumulatormittels verbunden ist.

3. System nach Anspruch 2, wobei das Stromerzeugungsmittel einen Doppeltransistor (Q$_{1A}$, Q$_{1B}$) aufweist, der Emitter hat, die mit den Widerständen (R$_A$, R$_1$—R$_n$) verbunden sind, wobei ein Kollektor mit dem Kondensator (C$_1$) verbunden ist und der andere Kollektor mit einem weiteren Widerstand (R$_B$) verbunden ist.

4. System nach Anspruch 3 mit einem Schalter (S$_A$), der parallel zum Kondensator (C$_1$) verbunden ist und einen Steueranschluß hat, der mit einem Ausgang des Vergleichsverstärkers (54) verbunden ist zum Schließen des Schalters (S$_A$), wenn die Spannung über dem Kondensator die ausgewählte Spannung (V$_1$) erreicht, um den Kondensator zu entladen.

**Revendications**

1. Un système de débitmètre à vortex, comprenant un débitmètre à vortex et un circuit destiné à traiter un signal de fréquence de décollement de tourbillons du débitmètre, le circuit comprenant:

un détecteur de phase (18) destiné à recevoir le signal de fréquence de décollement de tourbillons et à le comparer avec un signal de fréquence de poursuite généré de façon locale;

un filtre passe-bas (26) destiné à recevoir un signal de sortie du détecteur de phase (18) et à produire un signal analogique correspondant;

un oscillateur commandé par tension (20), connecté à une sortie du filtre passe-bas (26) pour générer le signal de fréquence de poursuite correspondant au signal de fréquence de décollement de tourbillons; et

des moyens accumulateurs (42) connectés à l'oscillateur commandé par tension (20) pour recevoir le signal de fréquence de poursuite;

caractérisé en ce que des moyens de mesure de temps (50) sont connectés aux moyens accumulateurs (42) pour activer les moyens accumulateurs de façon à mesurer la fréquence du signal de fréquence de poursuite pendant un intervalle de temps sélectionné, les moyens accumulateurs (42) comportant des lignes de sortie numériques (46) pour produire un signal numérique correspondant à la fréquence mesurée, et en ce que les moyens de mesure de temps (50) comprennent un ensemble de résistances connectées en série

(R$_1$ à R$_N$), avec un élément de commutation électronique respectif (S$_1$ à S$_N$) connecté en parallèle avec chaque résistance, des moyens (UART) destinés à ouvrir sélectivement les éléments de commutation (S$_1$ à S$_N$) pour établir une valeur de résistance sélectionnée aux bornes de l'ensemble de résistances connectées en série (R$_1$ à R$_N$), une résistance (R$_A$) dont une extrémité est connectée à une extrémité des résistances connectées en série (R$_1$ à R$_N$), et dont l'autre extrémité est connectée à des moyens de génération de courant (Q$_{1A}$, Q$_{1B}$), ces moyens de génération de courant étant également connectés à l'autre extrémité des résistances connectées en série, pour produire un courant qui est proportionnel à une résistance équivalente formée par les résistances connectées en série, un condensateur (C$_1$) connecté aux moyens de génération de courant (Q$_{1A}$, Q$_{1B}$), de façon à être chargé jusqu'à une tension sélectionnée (V$_1$) en une durée qui dépend du courant que fournissent les moyens de génération de courant, et des moyens comparateurs connectés entre le condensateur (C$_1$) et les moyens accumulateurs (42), pour activer les moyens accumulateurs pendant la durée au cours de laquelle le condensateur (C$_1$) est chargé jusqu'à la tension sélectionnée (V$_1$).

2. Un système selon la revendication 1, dans lequel les moyens comparateurs comprennent un amplificateur comparateur (54) ayant une entrée connectée au condensateur (C$_1$), une autre entrée connectée à une source fournissant la tension sélectionnée (V$_1$), et une sortie connectée aux moyens accumulateurs (42), pour activer les moyens accumulateurs.

3. Un système selon la revendication 2, dans lequel les moyens de génération de courant comprennent un transistor double (Q$_{1A}$, Q$_{1B}$) ayant des émetteurs connectés aux résistances (R$_A$, R$_1$ à R$_N$), un collecteur connecté au condensateur (C$_1$) et un autre collecteur connecté à une résistance supplémentaire (R$_B$).

4. Un système selon la revendication 3, comprenant un élément de commutation (S$_A$) connecté en parallèle avec le condensateur (C$_1$), et ayant une borne de commande connectée à une sortie de l'amplificateur comparateur (54), pour fermer l'élément de commutation (S$_A$) lorsque la tension aux bornes du condensateur atteint la tension sélectionnée (V$_1$), dans le but de décharger le condensateur.

*FIG. 1*

VORTEX SENSOR ~10

12

14

PREAMP

SIGNAL DROPOUT DETECTOR ~40

A.C. COUPLING

16

18

PHASE DETECTOR

SWITCH 24

LOW PASS FILTER 26

PHASE LOCKED LOOP

28

34

22

VCO

BUFFER AMP

36

20

30

32

FREQ. SIGNAL

$V_{REF}$

$R_1$ $S_1$

$R_2$ $S_2$

$R_3$ $S_3$

$S_N$

$R_A$

$R_N$

FREQ. SIGNAL    *FIG. 2*

37

50

TO UART (RANGE/GAIN CODE)

$Q_{1A}$    $Q_{1B}$

54    56    58    48    44    .42

ONE SHOT    ONE SHOT    COUNTER (ACCUMULATOR)

$C_1$

$V_1$

$R_B$    $S_A$

46

TO UART
INPUT STROBE

TO UART